# EUROPEAN PATENT APPLICATION

(11) **EP 2 144 375 A2**
(43) Date of publication of application: **13.01.2010**
(21) Application number: 09163963.3
(22) Date of filing: 29.06.2009
(51) Int. Cl.: H04B 1/10, H04B 15/00

(54) **High frequency receiver and high frequency device using the same**

(30) Priority: 09.07.2008 JP 2008178817; 09.07.2008 JP 2008178818
(71) Applicant: Panasonic Corporation, Kadoma-shi Osaka 571-8501 (JP)
(72) Inventor: Satoh, Yuki, Osaka-shi Osaka 540-6207 (JP); Fujishima, Akira, Osaka-shi Osaka 540-6207 (JP)
(74) Representative: Grünecker, Kinkeldey, Stockmair & Schwanhäusser Anwaltssozietät

(57) **Abstract**

A high frequency receiver cancels a plurality of noise signals which are contained in a high frequency signal and outputted from a plurality of noise signal sources. The high frequency receiver cancels the noise signals using a plurality of pick-up noise signals extracted from a plurality of pick-up antennas disposed near the noise signal sources. At least one of the pick-up noise signals is selected in descending order of their effects on the degradation of reception quality, thereby completing noise cancelling in a short time.

## Description

### BACKGROUND OF THE INVENTION

### 1. Field of the Invention

The present invention relates to a high frequency device using a high frequency receiver which enables images to be displayed on a display portion based on a signal from a digital signal processor. The high frequency device can be a portable phone, a portable game, a portable computer, a portable dictionary, a car navigation system, or the like.

### 2. Background Art

In recent years, high frequency devices have become lighter in weight and smaller in size, with increasing reduction in size of components and increasing integration of semiconductor devices. Hence, there have been efforts to increase the functionality of the high frequency devices.

As a result, high frequency devices function as portable phones, portable games, portable computers, portable dictionaries, car navigation systems, and even portable TVs.

An example of a conventional technique related to the present invention is shown in Japanese Patent Unexamined Publication No. 2008-22294.

In such a conventional high frequency device, a display portion, a system controller, and other components radiate a clock signal and a noise signal, which is a harmonic of the clock signal. These signals come into a TV antenna, causing degradation of reception quality, particularly in a weak electric field.

In order to reduce the degradation of reception quality, the noise signals which have come into the TV antenna from the plurality of noise signal sources are cancelled using a plurality of noise cancellers.

In a portable phone with TV function, however, the noise signals from the noise signal sources differently affect the degradation of TV reception quality depending on the use conditions of the phone. The use conditions include: receiving a TV signal, recording TV program while the phone is in use, and recording TV program while the camera is in use.

In order to improve TV reception quality, noise signals are cancelled using the same number of noise cancellers as the noise signal sources in consideration of various TV reception conditions. This requires a long processing time.

### SUMMARY OF THE INVENTION

The high frequency receiver of the present invention cancels a plurality of noise signals which are contained in a high frequency signal and outputted from a plurality of noise signal sources. The high frequency receiver cancels the noise signals by selecting at least one of a plurality of pick-up noise signals extracted from a plurality of pick-up antennas disposed near the noise signal sources.

The high frequency receiver further includes on-off switches, which are turned on in descending order of the effects of the pick-up noise signals on the degradation of reception quality so as to implement noise cancelling.

With this construction and operation, even if the reception quality of a high-frequency signal is degraded by noise signals from noise signal sources, noise cancelling can be completed in a short time, thereby improving the reception quality of the high-frequency signal.

### BRIEF DESCRIPTION OF THE DRAWINGS

Fig. 1 is a block diagram of a high frequency device according to an embodiment of the present invention.
Fig. 2 is a circuit block diagram of the high frequency device according to the embodiment of the present invention.
Fig. 3 is a flowchart of a noise cancelling operation of the high frequency device according to the embodiment of the present invention.
Fig. 4A shows an output signal from a tuner when few noise signals come from noise signal sources.
Fig. 4B shows an output signal from the tuner when the carrier-to-noise ratio is degraded due to the noise signals from the noise signal sources.

### DETAILED DESCRIPTION OF THE INVENTION EMBODIMENT

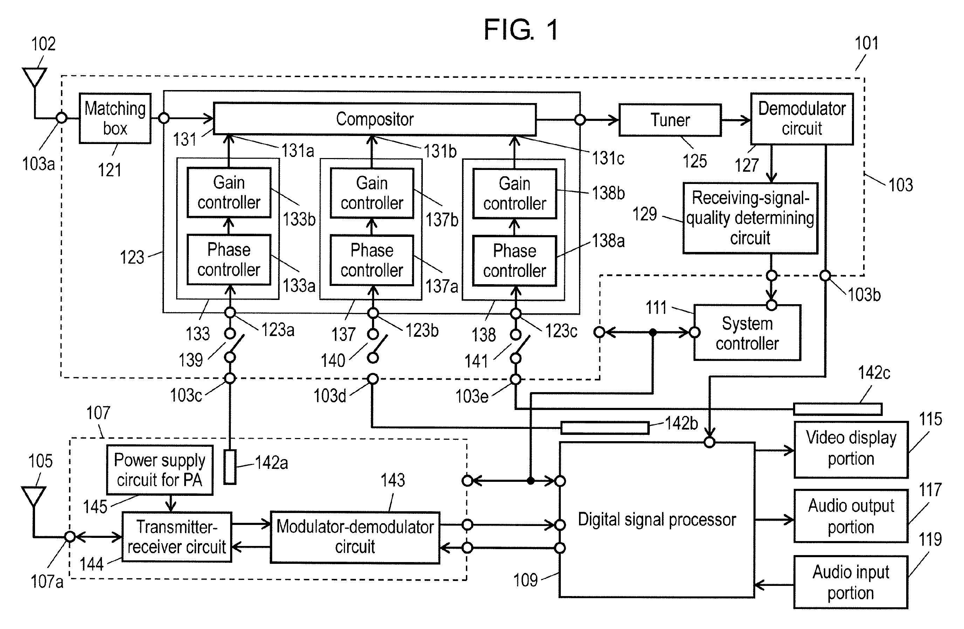

An embodiment of the present invention will be described as follows with reference to Fig. 1, which is a block diagram of high frequency device 101. High frequency device 101 can receive a UHF digital broadcast signal as a high-frequency signal, and has a phone function.

High frequency device 101 includes high frequency receiver 103, transceiver 107, digital signal processor 109, and system controller 111. High frequency receiver 103 includes input terminal 103a connected to TV antenna 102. Transceiver 107 includes input-output terminal 107a connected to mobile phone antenna 105. Digital signal processor 109 is connected to the output signal of high frequency receiver 103 and to the input and output signals of transceiver 107. System controller 111 controls high frequency receiver 103, transceiver 107, and digital signal processor 109. High frequency device 101 further includes video display portion 115, audio output portion 117, and audio input portion 119, which are connected to digital signal processor 109.

First, high frequency receiver 103 is described as follows. High frequency receiver 103 includes matching box 121, noise canceller 123, tuner 125, and demodulator circuit 127, which are connected in this order between input terminal 103a and output terminal 103b. Matching box 121 reduces the matching loss between TV antenna 102 and high frequency receiver 103. Noise canceller 123 cancels noise signals. Tuner 125 receives TV signals. Demodulator circuit 127 demodulates an input signal and outputs a TS (transport stream) signal.

High frequency receiver 103 further includes receiving-signal-quality determining circuit 129, which determines the reception quality by comparing a BER (bit error rate) or a C/N (carrier-to-noise ratio) outputted from demodulator circuit 127 with a predetermined reference value. Receiving-signal-quality detecting circuit 129 supplies its determination signal to system controller 111 so as to control the entire system and to effect the start of the noise cancelling operation by noise canceller 123.

Noise canceller 123 includes compositor 131 and cancel signal generating circuits 133, 137, and 138. Compositor 131 is connected between the output of matching box 121 and the input of tuner 125. Cancel signal generating circuit 133 is connected between input 131a of compositor 131 and input terminal 123a of noise canceller 123. Cancel signal generating circuit 137 is connected between input 131b of compositor 131 and input terminal 123b of noise canceller 123. Cancel signal generating circuit 138 is connected between input 131c of compositor 131 and input terminal 123c of noise canceller 123.

Cancel signal generating circuit 133 includes phase controller 133a and gain controller 133b connected in series between its input and output. Cancel signal generating circuit 137 includes phase controller 137a and gain controller 137b connected in series between its input and output. Cancel signal generating circuit 138 includes phase controller 138a and gain controller 138b connected in series between its input and output.

High frequency receiver 103 further includes input terminals 103c, 103d, and 103e connected to pick-up antennas 142a, 142b, and 142c, respectively. Input terminals 103c, 103d, and 103e are also referred to as input units 103c, 103d, and 103e, respectively.

Between input terminals 103c and 123a is connected on-off controllable switch 139. Between input terminals 103d and 123b is connected on-off controllable switch 140. Between input terminals 103e and 123c is connected on-off controllable switch 141. The on-off operation of switches 139, 140, and 141 can be controlled either exclusively or in combination.

Transceiver 107 includes transmitter-receiver circuit 144, modulator-demodulator circuit 143, power supply circuit 145, and pick-up antenna 142a. Transmitter-receiver circuit 144 is connected to input-output terminal 107a so as to process transmitted and received phone signals. Modulator-demodulator circuit 143 is connected to the output of transmitter-receiver circuit 144 so as to process modulated and demodulated signals. Power supply circuit 145 supplies power to transmission power amplifier (PA) included in transmitter-receiver circuit 144. Pick-up antenna 142a is disposed near power supply circuit 145 so as to extract a pick-up noise signal.

Pick-up antennas 142b and 142c for extracting pick-up noise signals are disposed near digital signal processor 109 and near video display portion 115, respectively.

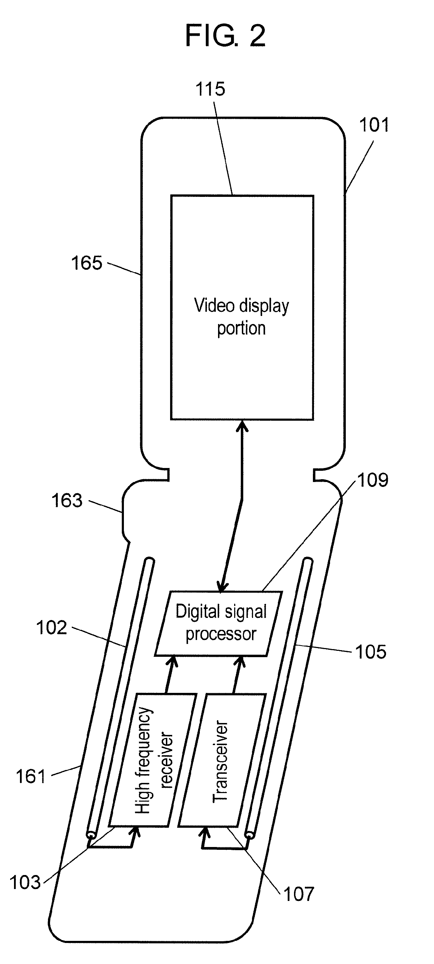

Fig. 2 shows the arrangement of blocks, which are main components of high frequency device 101, where second case 165 is opened apart from first case 161 so that the user can talk or watch TV on the phone.

In Fig. 2, first and second cases 161 and 165 are connected openably and closably by hinge part 163. Although not illustrated, second case 165 can be folded over first case 161 by hinge part 163 so as to be more compact and more portable.

First case 161 includes TV antenna 102, high frequency receiver 103, mobile phone antenna 105, transceiver 107, and digital signal processor 109.

Second case 165 includes video display portion 115 exposed on its side facing first case 161.

The operation of high frequency device 101 thus structured will be described as follows with reference to Figs. 1 and 2.

The following is a description of the case where the user uses the phone using transceiver 107. An audio signal from audio input portion 119 is converted into a digital signal by digital signal processor 109, modulated by modulator-demodulator circuit 143, transmitted through transmitter-receiver circuit 144 and outputted from mobile phone antenna 105.

On the other hand, a signal received by mobile phone antenna 105 is selected and frequency-converted by transmitter-receiver circuit 144, demodulated by modulator-demodulator circuit 143, converted into an analog signal by digital signal processor 109, and transmitted to video display portion 115 and audio output portion 117. This allows the user to view image or listen to audio.

When the phone is in use, power supply circuit 145 supplying power to the transmission power amplifier (PA) of transmitter-receiver circuit 144, video display portion 115, and digital signal processor 109 radiate a clock signal and a UHF band noise signal, which is a harmonic of the clock signal. These signals come into TV antenna 102, causing degradation of reception quality, particularly in a weak electric field.

The noise signals are reduced by noise canceller 123 as follows.

A TV signal and a high-frequency signal containing noise signals from noise signal sources enter matching box 121 through TV antenna 102. Matching box 121 allows impedance matching between TV antenna 102 and high frequency receiver 103, ensuring receiving sensitivity even when TV antenna 102 is shorter.

Matching box 121 outputs the TV signal and the high-frequency signal containing the noise signals came from the noise signal sources to noise canceller 123.

In noise canceller 123, cancel signal generating circuit 133 is used with switch 139 in the ON position. This makes it possible to cancel the noise signal which has come into TV antenna 102 from power supply circuit 145 for supplying power to the transmission power amplifier (PA) using a pick-up noise signal extracted from pick-up antenna 142a.

Similarly, cancel signal generating circuit 137 is used with switch 140 in the ON position. This makes it possible to cancel the noise signal which has come into TV antenna 102 from digital signal processor 109 using a pick-up noise signal extracted from pick-up antenna 142b.

Similarly, cancel signal generating circuit 138 is used with switch 141 in the ON position. This makes it possible to cancel the noise signal which has come into TV antenna 102 from video display portion 115 using a pick-up noise signal extracted from pick-up antenna 142c.

Thus, at least one of the pick-up noise signals is selected and at least one of the noise signals can be cancelled.

Noise canceller 123 outputs a high-frequency signal to tuner 125. In tuner 125, a reception channel is selected and an intermediate frequency signal or a baseband signal is gain-controlled and frequency-converted at the direction of system controller 111. Tuner 125 outputs the frequency-converted signal to demodulator circuit 127.

Demodulator circuit 127 demodulates the frequency-converted signal into a TS signal and outputs the TS signal through output terminal 103b to digital signal processor 109. Digital signal processor 109 outputs a video signal and an audio signal to video display portion 115 and audio output portion 117, respectively. This allows the user to view image or listen to audio.

Demodulator circuit 127 also outputs a reception quality signal such as a BER or a C/N to receiving-signal-quality determining circuit 129, which determines the reception quality by comparing the BER or the C/N with the predetermined reference value.

Instead of using the BER or the C/N received from demodulator circuit 127, receiving-signal-quality determining circuit 129 may use an AGC (automatic gain control) voltage for gain-controlling an amplifier disposed in tuner 125.

The effects of noise signals from noise signal sources on TV reception quality are a problem for the receiving sensitivity in a weak electric field. The level of the weak electric field signal can be determined using the AGC voltage of the amplifier arranged at a later stage of tuner 125. In addition, the determination can be made quickly because the AGC voltage has a high response speed.

Receiving-signal-quality determining circuit 129 outputs a determination signal to system controller 111, which optimizes the phase and the gain of phase controller 133a and gain controller 133b of cancel signal generating circuit 133.

System controller 111 further optimizes the phase and the gain of phase controller 137a and gain controller 137b of cancel signal generating circuit 137, and also the phase and the gain of phase controller 138a and gain controller 138b of cancel signal generating circuit 138.

Thus, the noise signals from the noise signal sources can be cancelled by noise canceller 123, receiving-signal-quality determining circuit 129, and system controller 111.

The noise signals from the noise signal sources, however, differently affect the degradation of TV reception quality depending on the operating conditions of high frequency device 101.

Table 1 below shows the effects of the noise signals from the noise signal sources on the degradation of TV reception quality, depending on the operating conditions of high frequency device 101 when receiving a TV signal.

**Table 1**

| Operating conditions of high frequency device 101 when receiving a TV signal | Portable phone | Opened or Closed | Power supply circuit 145 | Digital signal processor 109 | Video display portion 115 |
|---|---|---|---|---|---|
| | | | Pick-up antenna 142a | Pick-up antenna 142b | Pick-up antenna 142c |
| | | | Switch 139 | Switch 140 | Switch 141 |
| 1 | standby mode | opened, receiving a TV signal | | ×× | × |
| 2 | standby mode | closed, recording TV program | | ×× | |
| 3 | standby mode, camera in use | opened, recording TV program | | ×× | × |
| 4 | in use | opened, recording TV program | ××× | ×× | × |

Noise signal source has:
× some effects
×× large effects
××× the largest effects
on the degradation of TV reception quality

The operating conditions of high frequency device 101 when receiving a TV signal include: receiving a TV signal, recording TV program while the phone is in use, and recording TV program while the camera is in use.

In an operating condition 1 to receive a TV signal, a TV signal is received with second case 165 open when the phone is in the standby mode. In this condition, noise signals come into TV antenna 102 from video display portion 115 and digital signal processor 109, and enter noise canceller 123.

In an operating condition 2 to receive a TV signal, TV program recording is performed with second case 165 closed when the phone is in the standby mode. A noise signal comes into TV antenna 102 from digital signal processor 109 and enters noise canceller 123.

In an operating condition 3 to receive a TV signal, camera portion 113 is operated and at the same time, TV program recording is performed with second case 165 open when the phone is in the standby mode. In this condition, noise signals come into TV antenna 102 from video display portion 115 and digital signal processor 109 and enter noise canceller 123.

In an operating condition 4 to receive a TV signal, TV program recording is performed while the phone is in use with second case 165 open. Noise signals come into TV antenna 102 from power supply circuit 145, video display portion 115, and digital signal processor 109, and enter noise canceller 123.

The noise signal from power supply circuit 145 is larger than other the noise signals because the signal outputted from transceiver 107 requires a large signal level.

Thus, in the operating conditions 1 to 4 to receive a TV signal, the noise signal from digital signal processor 109 always have effects on the degradation of TV reception quality. The reason for this is considered that digital signal processor 109 provides a higher clock frequency than the other noise signal sources.

In the operating conditions 1 and 3 to receive a TV signal, the noise signal from video display portion 115 has some effects on the degradation of TV reception quality because video display portion 115 is displayed open.

In the operating condition 4 to receive a TV signal, the noise signal from video display portion 115 has some effects on the degradation of TV reception quality. In addition, the noise signal from power supply circuit 145 has the largest effects because the phone is in use.

Thus, the noise signals from the noise signal sources differently affect the degradation of TV reception quality depending on the operating conditions of high frequency device 101 when receiving a TV signal.

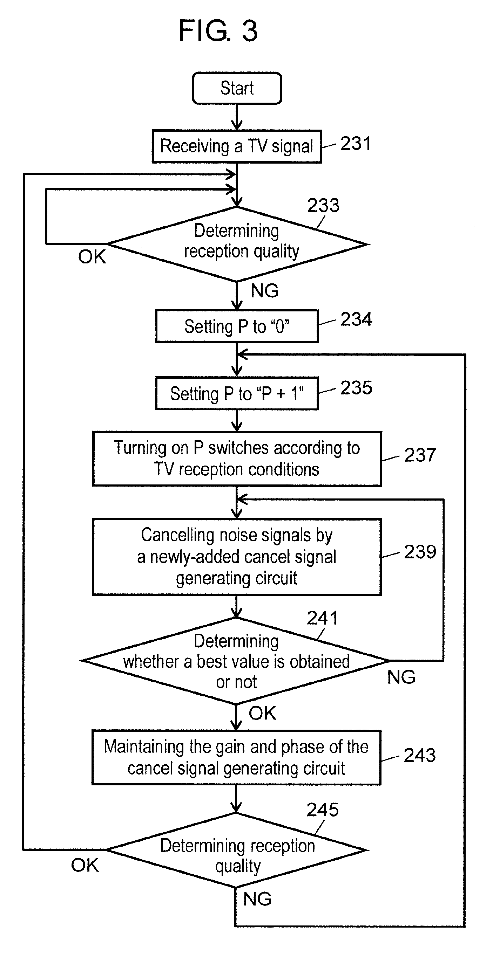

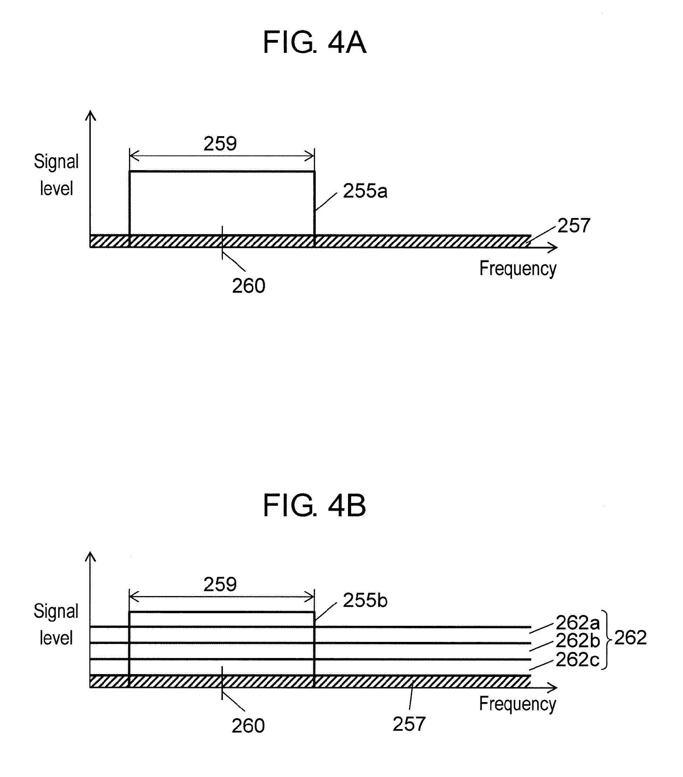

The following is a description, with reference to Figs. 3, 4A, and 4B, of how to improve the reception quality in a short time using noise canceller 123 in the operating condition 4 where the noise signal has the largest effects on the degradation of TV reception quality.

Fig. 3 is a flowchart of a noise cancelling operation. In Step 231, a desired channel is selected using tuner 125. Step 231 is followed by Step 233.

In Step 233, receiving-signal-quality determining circuit 129 determines the BER or the C/N based on the predetermined reference value. When it is determined to be good (OK), the determination of the BER is repeated through a return loop.

Fig. 4A shows an output signal from tuner 125 in this case, where there are few noise signals from the noise signal sources.

The horizontal and vertical axes represent frequency and signal level, respectively. Received signal 255a has a bandwidth 259 of 5.6 MHz, and a center frequency 260 of 4 MHz. Noise signal 257, which is a base noise, is the sum of thermal noise power related to Boltzmann constant and the noise figure (NF) of high frequency device 101.

In Step 233, on the other hand, receiving-signal-quality determining circuit 129 determines the BER or the C/N based on the predetermined reference value. When it is determined to be bad (NG), the process goes to Step 234 where a parameter P is initialized to "0".

Fig. 4B shows an output signal from tuner 125 when received signal 255b is reduced in a weak electric field. Received signal 255b has a C/N reduced by noise signals 262 from the noise signal sources.

Noise signals 262 are composed of noise signal 262a from power supply circuit 145, which supplies power to transmission power amplifier (PA), noise signal 262b from digital signal processor 109, and noise signal 262c from video display portion 115. Noise signal 262a is the largest, noise signal 262b is the second largest, and noise signal 262c is the smallest.

Step 234 is followed by Step 235 in which the parameter P is set to "P + 1". Step 235 is then followed by Step 237.

In Step 237, switch 139 is turned on to make pick-up antenna 142a extract a pick-up noise signal. This allows the noise signal from power supply circuit 145 provided for the transmission power amplifier to be selected based on Table 1 showing the operating conditions to receive a TV signal. The noise signal from power supply circuit 145 has the largest effects on the degradation of TV reception quality. Step 237 is followed by Step 239.

In Step 239, cancel signal generating circuit 133 and compositor 131 cancel the noise signal which has come through input terminal 103a from power supply circuit 145. Step 239 is followed by Step 241.

In Step 241, receiving-signal-quality determining circuit 129 determines whether a best value is obtained or not by comparing the current BER or C/N with the previous BER or C/N. The comparison is repeated by returning to Step 239 until the best value is obtained.

When the best value has been obtained in Step 241, the process goes to Step 243 in which the phase and gain of cancel signal generating circuit 133 obtained in Step 239 are maintained. Step 243 is followed by Step 245.

In Step 245, receiving-signal-quality determining circuit 129 determines the BER or the C/N based on the predetermined reference value. When it is determined to be good (OK), the process goes back to Step 233. When it is determined to be bad (NG), the process goes back to Step 235 in which the parameter P is set to "2". Step 235 is followed by Step 237.

In Step 237, switch 140 is turned on with switch 139 in the ON position based on Table 1. Switch 139 is turned on to select the noise signal coming from power supply circuit 145, which has the largest effects on the degradation of TV reception quality. Switch 140 is turned on to select the noise signal coming from digital signal processor 109, which has the second largest effects on the degradation of TV reception quality.

Step 237 is followed by Step 239 in which newly-added cancel signal generating circuit 137 and compositor 131 cancel the noise signal which has come through input terminal 103a from power supply circuit 145. Step 239 is followed by Step 241.

In Step 241, receiving-signal-quality determining circuit 129 determines whether a best value is obtained or not by comparing the current BER or C/N with the previous BER or C/N. The comparison is repeated by returning to Step 239 until the best value is obtained.

When the best value has been obtained in Step 241, the process goes to Step 243 in which the phases and gains of cancel signal generating circuits 133 and 137 obtained in Step 239 are maintained. Step 243 is followed by Step 245.

In Step 245, receiving-signal-quality determining circuit 129 determines the BER or the C/N based on the predetermined reference value. When it is determined to be good (OK), the process goes back to Step 233. When it is determined to be bad (NG), the process goes back to Step 235 in which the parameter P is set to "3". Step 235 is followed by Step 237.

In Step 237, switch 141 is turned on with switches 139 and 140 in the ON position based on Table 1 showing the operating conditions to receive a TV signal. Switch 141 is turned on to select the noise signal coming from video display portion 115, which has the smallest effects on the degradation of TV reception quality. Cancel signal generating circuit 138 cancels the noise signal using the pick-up noise signal picked up by pick-up antenna 142c.

After Step 237, the process goes to Steps 239 and 241, and when the best value is obtained, further goes to Steps 243 and 245.

These series of operations in Steps 235 through 245 are repeated to reduce noise signals 262 close to noise signal 257, which is the base noise, thereby improving the C/N of the received signal.

When the operating conditions to receive a TV signal are different from each other, as shown in Table 1, the number P of switches to be turned on, and the order in which to turn on P switches are different.

More specifically, in the operating condition 4, as described above, switches 139, 140, and 141 are turned on in this order. Therefore, the number P of switches is three.

In the operating conditions 1 and 3, switches 140 and 141 are turned on in this order, and the number P of switches is two.

In the operating condition 2, only switch 140 is turned on, and the number P of switches is one.

When noise signals which have come into TV antenna 102 from noise signal sources thus degrade the TV reception quality, the pick-up noise signals extracted from pick-up antennas 142a, 142b, and 142c are selected in descending order of their effects on the degradation of reception quality to perform noise cancelling until the reception quality is determined OK.

Thus cancelling the noise signals in descending order of their effects on the degradation of reception quality can complete noise cancelling in a short time, thereby improving the reception quality.

Alternatively, the order in which to turn on the switches can be predetermined according to the operating conditions 1 to 4 to receive a TV signal, thereby completing noise cancelling in a shorter time.

In the operating conditions 1 to 4 to receive a TV signal, the noise signal from digital signal processor 109 always has effects on the degradation of TV reception quality. Therefore, it is possible to preferentially select switch 140 connected to pick-up antenna 142b, which picks up the noise signal from digital signal processor 109. Alternatively, it is possible to keep switch 140 in the ON state.

A TV signal is a digital signal in the embodiment; however, the present invention is also applicable to receiving one segment signal or an analog signal.

## Claims

1. A high frequency receiver for receiving a high-frequency signal, the high frequency receiver comprising:
an input terminal for receiving the high-frequency signal containing a plurality of noise signals from a plurality of noise signal sources;
input units for receiving a plurality of pick-up noise signals extracted from a plurality of pick-up antennas disposed near the noise signal sources;
a noise canceller for receiving the high-frequency signal from the input terminal and the pick-up noise signals from the input units, the noise canceller phase-cancelling the noise signals contained in the high-frequency signal;
a tuner for receiving a signal from the noise canceller; and
a demodulator circuit for receiving a signal from the tuner and outputting a demodulated signal, wherein
at least one of the pick-up noise signals is selected to cancel at least one of the noise signals.

2. The high frequency receiver of claim 1, wherein
the noise canceller includes:
a compositor for cancelling the noise signals; and
a plurality of cancel signal generating circuits for receiving the pick-up noise signals from the input units and supplying the compositor with a plurality of noise-cancelling signals.

3. The high frequency receiver of claim 2, wherein
the input units and the cancel signal generating circuits are connected to each other via on-off controllable switches, the switches being turned on based on effects of the pick-up noise signals on degradation of reception quality.

4. The high frequency receiver of claim 3, wherein
the switches are turned on in descending order of the effects of the pick-up noise signals on the degradation of reception quality.

5. The high frequency receiver of claim 3, wherein
the number of switches to be turned on is predetermined according to operating conditions to receive the high-frequency signal.

6. The high frequency receiver of claim 1, further comprising:
a receiving-signal-quality determining circuit for determining reception quality of the demodulated signal, wherein
the noise canceller starts a noise cancelling operation according to a determination signal of the receiving-signal-quality determining circuit.

7. The high frequency receiver of claim 6, wherein
the receiving-signal-quality determining circuit determines the reception quality based on a bit error rate or a carrier-to-noise ratio.

8. The high frequency receiver of claim 1, further comprising:
a receiving-signal-quality determining circuit capable of determining a weak electric field using an automatic gain control voltage of an amplifier disposed in the tuner, wherein
the noise canceller starts a noise cancelling operation according to a determination signal of the receiving-signal-quality determining circuit.

9. A high frequency device using the high frequency receiver of claim 1, comprising:
a transceiver composed of a transmitter-receiver circuit for transmitting and receiving signals, and a modulator-demodulator circuit for modulating and demodulating signals;
a power supply circuit for supplying electric power to a transmission power amplifier disposed in the transceiver;
a digital signal processor connected to the high frequency receiver and the transceiver;
a system controller for controlling the high frequency receiver, the transceiver, and the digital signal processor; and
a video display portion connected to the digital signal processor.

10. The high frequency device of claim 9, wherein
one of the pick-up antennas is disposed near the power supply circuit.

11. The high frequency device of claim 9, wherein
one of the pick-up antennas is disposed near the digital signal processor.

12. The high frequency device of claim 9, wherein
one of the pick-up antennas is disposed near the video display portion.
